# EUROPÄISCHE PATENTSCHRIFT

(11) **EP 2 992 987 B1**
(45) Veröffentlichungstag und Bekanntmachung des Hinweises auf die Patenterteilung: **08.03.2017**
(21) Anmeldenummer: 15181780.6
(22) Anmeldetag: 20.08.2015
(51) Int. Cl.: B23B 27/16

(54) **WERKZEUGTRÄGER UND WERKZEUGSET FÜR EINE LANGDREHMASCHINE**
TOOL HOLDER AND TOOL SET FOR A LONG LATHE
PORTE-OUTIL ET JEU D'OUTILS POUR UN LONGUE TOUR

(30) Priorität: 03.09.2014 DE 102014112711
(43) Veröffentlichungstag der Anmeldung: 09.03.2016
(73) Patentinhaber: Simtek AG, 72116 Mössingen (DE)
(72) Erfinder: Seifermann, Norbert, 72411 Bodelshausen (DE)
(74) Vertreter: Jakelski & Althoff Patentanwälte PartG mbB

(56) Entgegenhaltungen:
- EP-A2- 0 247 011
- WO-A1-02/24387
- DE-T2- 60 311 074
- JP-A- H09 229 038

## Beschreibung

Die vorliegende Erfindung betrifft einen Werkzeugträger für eine Langdrehmaschine. Weiterhin betrifft die Erfindung ein Werkzeugset, das den Werkzeugträger und eine Schneidplatte umfasst.

### Stand der Technik

Langdrehmaschinen sind Werkzeugmaschinen zur Herstellung meist rotationssymmetrischer Werkstücke durch zerspanende Fertigung aus einem stabförmigen Rohmaterial. An der Langdrehmaschine können verschiedenste Rotationskörper hergestellt werden. Im einfachsten Fall sind dies zylindrische oder ebene zur Drehachse rechtwinklige Flächen. Es sind aber auch komplexere Formen möglich, die mittels Zusatzeinrichtungen auch von der DrehSymmetrie abweichen können. Das Werkstück führt durch Rotation eine Schlitten-Bewegung aus. Das Schneidwerkzeug, welches als Drehmeißel bezeichnet wird, ist mittels eines Werkzeugträgers fest auf den Werkzeugschlitten gespannt, führt mit ihm die Vorschubbewegung aus und nimmt dabei kontinuierlich einen Span ab, indem der Schlitten längs sowie quer zur Rotationsachse des Werkstückes entlang der zur bearbeitenden Fläche bewegt wird. Der Drehmeißel ist Teil einer Schneidplatte, die entweder nur eine einzige Schneide oder auch mehrere Schneiden aufweisen kann. Schneidplatten mit mehreren Schneiden werden als Wechselschneidplatten bezeichnet. Es ist stets nur eine Schneide der Wechselschneidplatte im Einsatz. Wenn diese aufgrund von Verschleiß stumpf geworden ist, ist jedoch kein Wechsel der Schneidplatte, sondern nur ein Weiterdrehen bis zur nächsten Schneide notwendig. Sowohl für einen Wechsel der Schneidplatte als auch für ein Weiterdrehen einer Wechselschneidplatte, muss diese vom Wergzeugträger gelöst werden. Hierzu ist üblicherweise eine Schraube herauszudrehen, welche die Schneidplatte auf dem Werkzeugträger fixiert. Dies ist bei Langdrehmaschinen mit dem Problem verbunden, dass die Schraube aufgrund der Platzierung des Werkzeugträgers unter sehr beengten Bedingungen nur schwer zugänglich ist. Ein Wechsel der Schneidplatte ist deshalb oftmals nur dann möglich, wenn zuvor der Werkzeugträger aus der Langdrehmaschine entfernt wurde. Dies erfordert allerdings nach Wiedereinsetzen des Werkzeugträgers eine erneute Justierung desselben, um einen Betrieb der Langdrehmaschinen mit hinreichender Genauigkeit zu ermöglichen.

Die DE 603 11 074 T2 offenbart ein Schneidwerkzeug mit einem Schneideneinsatz, der durch ein Befestigungselement in einer Einsatzaufnahmevertiefung eines Werkzeugkörpers befestigt ist. Der Schneideneinsatz ist als Wechselschneidplatte ausgeführt. Die Form des Befestigungselements ist so gewählt, dass ein schneller Wechsel des Schneideinsatzes möglich ist.

In der DE 10 2009 004 631 B3 wird ein Langdrehwerkzeug beschrieben, das eine in einem Werkzeugkörper angeordnete Wechselschneidplatte aufweist. Um einen schnellen Wechsel der Wechselschneidplatte zu ermöglichen, ist dies mittels einer Spannschraube und einer Spannbuchse mit dem Werkzeugkörper verbunden. Der Werkzeugkörper weist ein Innengewinde auf, mit dem die Spannschraube verschraubt ist.

Aus der DE 10 2007 063 199 A1 ist ein Langdrehwerkzeug bekannt, das ebenfalls eine Wechselschneidplatte aufweist, die mittels einer Spannschraube und einer Spannbuchse mit einem Werkzeugkörper verbunden ist. Zusätzlich ist noch ein Sicherungsbolzen vorgesehen, der als Verdrehsicherung für die Spannbuchse dient.

Ein Wekzeugträger gemäß dem Oberbegriff des Anspruchs 1 ist aus EP 0 247 011 A2 bekannt.

Es ist Aufgabe der vorliegenden Erfindung einen Werkzeugträger bereitzustellen, der einen schnellen und einfachen Wechsel einer Schneidplatte auch unter den beengenden Bedingungen im Inneren einer Langdrehmaschine ermöglichen, ohne dass der Werkzeugträger aus der Langdrehmaschine entnommen werden muss. Weiterhin besteht die Aufgabe der vorliegenden Erfindung darin ein Werkzeugset bereitzustellen, das den Werkzeugträger und eine für die Verwendung mit diesem Werkzeugträger eingerichtete Schneidplatte umfasst.

### Offenbarung der Erfindung

Diese Aufgabe wird durch den erfindungsgemäßen Werkzeugträger für eine Langdrehmaschine mit den Merkmalen des Patentanspruchs 1 gelöst. Dieser weist einen Grundkörper, eine Aufnahme, die eingerichtet ist, um eine Schneidplatte aufzunehmen, sowie eine Gewindebohrung auf, die sich orthogonal zu der Aufnahme durch den Grundkörper erstreckt und mit ihrem einen Ende in der Aufnahme endet. Ein Gewindestift, der ein Außengewinde aufweist, ist in der Gewindebohrung angeordnet. Der Gewindestift weist einen Hohlraum auf, der durch eine Verbindungsöffnung mit der Aufnahme verbunden ist. Mindestens ein Durchbruch erstreckt sich von dem Hohlraum durch das Außengewinde. Der Durchbruch ist zu der Aufnahme hin offen.

Die Gewindebohrung weist bevorzugt eine Seitenöffnung auf, die sich in Längsrichtung des Grundkörpers zu einem Ende des Grundkörpers hin erstreckt. Die Länge der Seitenöffnung entspricht mindestens der Länge des Durchbruchs und die Breite der Seitenöffnung entspricht mindestens der Breite des Durchbruchs. Dies ermöglicht es, ein Befestigungselement durch die Seitenöffnung und den Durchbruch in den Hohlraum hineinzuschieben, wenn die Seitenöffnung und der Durchbruch zur Deckung gebracht werden.

Die Aufnahme ist vorzugsweise eingerichtet, um eine Wechselschneidplatte aufzunehmen. Um zu verhindern, dass die nicht im Einsatz befindliche Schneide der Wechselschneidplatte an den Grundkörper anschlägt und dadurch beschädigt wird, weist die Aufnahme einen Schneidenbereich zur Aufnahme einer Schneide der Wechselschneidplatte auf. Während die nicht genutzte Schneide von diesem Schneidenbereich aufgenommen wird, steht die in Benutzung befindliche Schneide über den Grundkörper hinaus und kann so mit dem Werkstück in Kontakt treten.

Der Gewindestift weist an seinem der Aufnahme abgewandten Ende bevorzugt eine Eingriffsöffnung auf, die eingerichtet ist, um mit einem Drehwerkzeug einzugreifen. Dies ermöglicht es, den Gewindestift in der Gewindebohrung zu drehen. Das Drehwerkzeug kann ein Schraubenzieher sein. Vorzugsweise handelt es sich allerdings um einen Innensechskantschlüssel, der aufgrund seiner gewinkelten Form das Drehen des Gewindestifts auch unter den beengenden Bedingungen im Inneren einer Langdrehmaschine ermöglicht.

Eine Schneidplatte ist eingerichtet, um von der Aufnahme des Werkzeugträgers aufgenommen zu werden. Sie weist einen Basisbereich mit mindestens einer Schneide auf. Durch den Basisbereich geht eine durchgehende Öffnung hindurch. In der durchgehenden Öffnung ist ein Verbindungselement angeordnet, das sich aus der durchgehenden Öffnung heraus erstreckt. Außerhalb der durchgehenden Öffnung weist das Verbindungselement ein Befestigungselement auf. Das Befestigungselement hat eine im Wesentlichen rechteckige Form mit einer ersten und einer zweiten Seite. Unter "im Wesentlichen rechteckig" werden dabei erfindungsgemäß auch solche Formen des Befestigungselements verstanden, bei denen eine oder mehrere Seiten des Befestigungselements abgerundet sind. Die erste Seite erstreckt sich orthogonal zu der durchgehenden Öffnung. Die zweite Seite erstreckt sich ebenfalls orthogonal zu der durchgehenden Öffnung. Sie bildet mit der ersten Seite im Wesentlichen einen rechten Winkel. Die erste Seite ist länger als die zweite Seite.

Um nicht nach jedem Verschleiß einer Schneide der Schneidplatte diese sofort austauschen zu müssen, handelt es sich bei dieser vorzugsweise um eine Wechselschneidplatte mit zwei Schneiden. Die durchgehende Öffnung ist im Mittelpunkt des Basisbereiches der Wechselschneidplatte angeordnet. Hierdurch kann eine der Schneiden in der Schneidenaufnahme des Werkzeugsträgers angeordnet werden, während die andere über den Grundköper des Werkzeugträgers hinaus ragt. Die durchgehende Öffnung kann in dieser Position über der Gewindebohrung des Grundkörpers platziert werden, so dass ein Eingreifen des Befestigungselementes in den Hohlraum des Gewindestifts möglich ist.

Die Querschnittsfläche der durchgehenden Öffnung nimmt bevorzugt entlang der durchgehenden Öffnung zu. Die Querschnittsfläche des Verbindungselementes nimmt von dem Ende, welches das Befestigungselement aufweist, zu dem von dem Befestigungselement abgewandten Ende hin vorzugsweise ebenfalls zu. Hierdurch kann das Befestigungselement sicher in der durchgehenden Öffnung fixiert werden.

Die Aufgabe wird des Weiteren durch ein Werkzeugset mit den Merkmalen des Patentanspruchs 5 gelöst. Das erfindungsgemäße Werkzeugset umfasst einen erfindungsgemäßen Werkzeugträger und die Schneidplatte. Der Hohlraum des Gewindestifts ist in dem Werkzeugset vorzugsweise eingerichtet, um das Befestigungselement aufzunehmen. Auf diese Weise kann die Schneidplatte mit der Seite, welche das Befestigungselement aufweist, in die Aufnahme eingebracht werden, wobei das Befestigungselement vom Hohlraum des Gewindestifts aufgenommen wird.

Der Durchbruch weist in dem Werkzeugset bevorzugt eine Breite auf, die kleiner ist als die Länge der ersten Seite und die größer ist als die Länge der zweiten Seite des Befestigungselementes. Dadurch kann das Befestigungselement der Schneidplatte nur parallel zur ersten Seite durch den Durchbruch des Gewindestifts in dessen Hohlraum hineingeführt werden. Auch ein Herausführen aus dem Hohlraum ist nur in dieser Richtung möglich. Ein Einbringen der Schneidplatte in die Aufnahme ist somit nur dann möglich, wenn der Durchbruch nicht durch eine Seitenwand des Grundkörpers verdeckt wird. Ist der Gewindestift hingegen so verdreht, dass dies der Fall ist, so ist ein Herausbewegen der Schneidplatte aus der Aufnahme des Werkzeugträgers nicht möglich.

Es ist weiterhin bevorzugt, dass die Verbindungsöffnung einen Durchmesser aufweist, der kleiner ist als die Länge der ersten Seite. Hiermit wird verhindert, dass die Schneidplatte entlang der Längsachse der Gewindebohrung aus dem Werkzeugträger herausbewegt wird. Durch Anziehen des Gewindestifts kann der Rand der Verbindungsöffnung Druck auf das Befestigungselement ausüben und die Schneidplatte somit orthogonal zur Längsrichtung des Werkzeugträgers in diesem fixieren.

### Kurze Beschreibung der Zeichnungen

Ausführungsbeispiele der Erfindung sind in den Zeichnungen dargestellt und in der nachfolgenden Beschreibung näher erläutert.
Figur 1 zeigt eine isometrische Darstellung des Grundkörpers eines Werkzeugträgers gemäß einem Ausführungsbeispiel der Erfindung.
Figur 2 zeigt eine isometrische Darstellung eines Gewindestifts eines Ausführungsbeispiels der Erfindung.
Figur 3 zeigt eine Aufsicht auf den Gewindestift gemäß Figur 2.
Figur 4 zeigt eine isometrische Darstellung einer Schneidplatte.
Figur 5 zeigt eine Querschnittsdarstellung der Schneidplatte gemäß Figur 4.
Figur 6 zeigt eine isometrische Darstellung eines Verbindungselementes gemäß einem Ausführungsbeispiel der Erfindung.
Figur 7 zeigt eine isometrische Darstellung eines mit einer Schneidplatte verbundenen Werkzeugträgers in einem Ausführungsbeispiel der Erfindung.
Figur 8 zeigt eine Längsschnittdarstellung eines mit einer Schneidplatte verbundenen Werkzeugträgers gemäß Figur 7.

### Ausführungsbeispiele der Erfindung

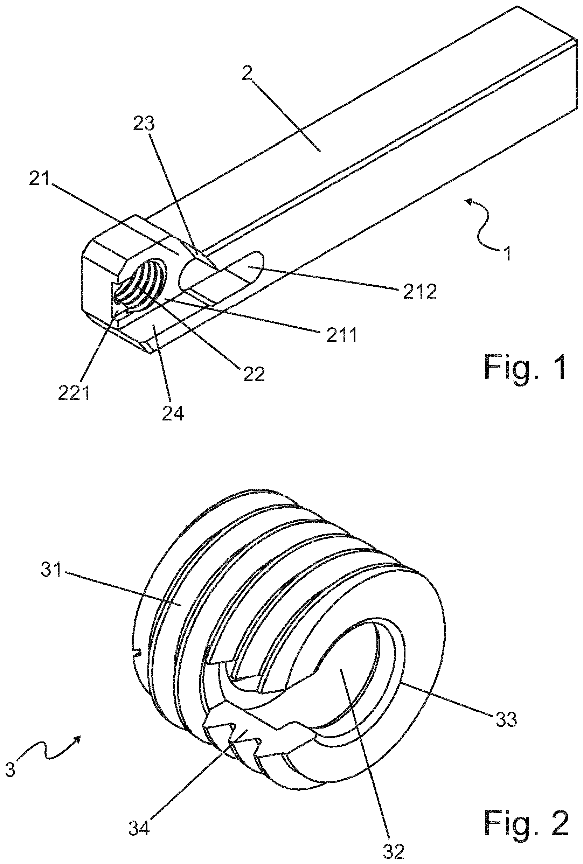

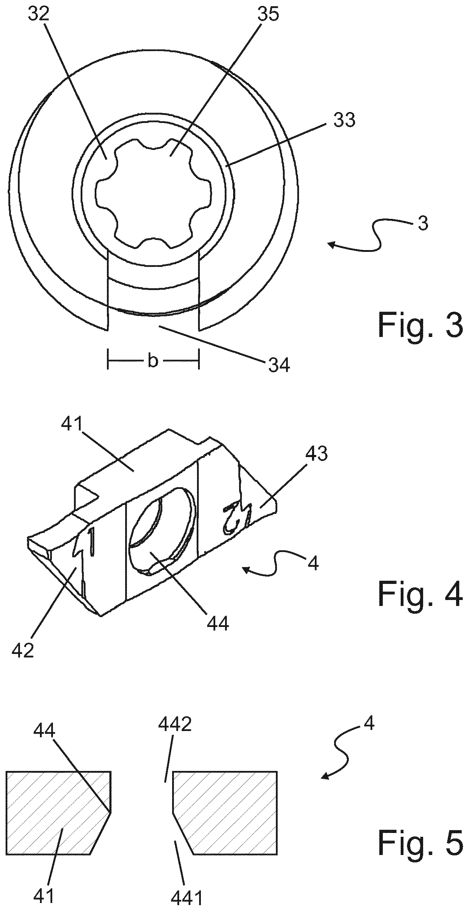

Ein Werkzeugträger 1 gemäß einem Ausführungsbeispiel der Erfindung ist unter Auslassung seines Gewindestifts in Figur 1 dargestellt. Der Grundkörper 2 des Werkzeugträgers weist eine Aufnahme 21 auf, die eingerichtet ist, um eine Schneidplatte aufzunehmen. Die Aufnahme 21 unterteilt sich in einen zentralen Bereich 211 und einen Schneidenbereich 212. Der zentrale Bereich 211 endet entlang der Längsachse des Grundkörpers 2 an einem Ende des Grundkörpers. Der Schneidenbereich 212 befindet sich auf der dem zentralen Bereich abgewandten Seite der Aufnahme 21 und ist so geformt, dass er eine Schneide einer Wechselschneidplatte aufnehmen kann. Orthogonal zum zentralen Bereich 211 der Aufnahme 21 erstreckt sich durch den Grundkörper 2 eine Gewindebohrung 22. In dieser ist ein in Figur 1 nicht dargestellter Gewindestift 3 eingebracht. Dieser ist in den Figuren 2 und 3 dargestellt. Der Gewindestift 3 weist ein Außengewinde 31 auf. Dieses ist eingerichtet, um mit dem Gewinde in die Gewindebohrung 22 einzugreifen. Im Inneren des Gewindestifts 3 befindet sich ein kreiszylinderförmiger Hohlraum 32. An einem Ende des Gewindestifts 3 befindet sich eine Verbindungsöffnung 33. Die Verbindungsöffnung 33 ist kreisförmig, wobei ihr Durchmesser kleiner ist als der Durchmesser des Hohlraums 32. Der Gewindestift 3 ist so in der Gewindebohrung 22 angeordnet, dass die Verbindungsöffnung 33 den Hohlraum 32 mit dem zentralen Bereich 211 der Aufnahme 21 verbindet. Über die Hälfte der Länge des Gewindestifts 3 ist dessen Außengewinde 31 durch einen Durchbruch 34 durchbrochen, welcher sich bis in den Hohlraum 32 erstreckt. Der Durchbruch 34 ist mit der Verbindungsöffnung 33 verbunden. Die Gewindebohrung 22 weist eine Seitenöffnung 221 auf, die sich in Längsrichtung des Grundkörpers 2 zu dem Ende des Grundkörpers 2 hin erstreckt, welches den zentralen Bereich 211 der Aufnahme 21 aufweist. Die Länge der Seitenöffnung 221 entspricht der Länge des Durchbruchs 34 und die Breite der Seitenöffnung 221 entspricht der Breite b des Durchbruchs 34. Auf der der Verbindungsöffnung 33 abgewandten Seite des Gewindestifts 3 befindet sich eine sternförmige Eingriffsöffnung 35. Mittels eines Innensechskantschlüssels, der in die Eingriffsöffnung eingeführt wird, ist es möglich, den Gewindestift 3 so zu verdrehen, dass ein Durchbruch 34 entweder mit der Seitenöffnung 221 zur Deckung kommt oder dass die Seitenöffnung 221 durch das Außengewinde 31 des Gewindestifts 3 verdeckt wird.

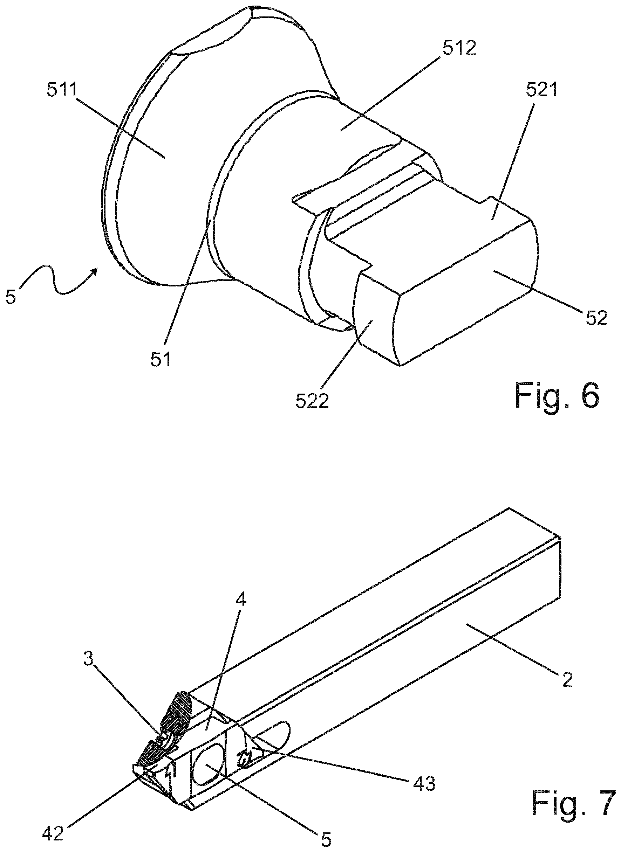

In den Figuren 4 und 5 ist eine Schneidplatte 4unter Auslassung Ihres Verbindungselementes 5 dargestellt. Die Schneidplatte 4 weist einen Basisbereich 41 auf. Sie ist als Wechselschneidplatte ausgeführt, so dass sie an zwei gegenüberliegenden Enden jeweils eine Schneide 42, 43 aufweist. Orthogonal zu der Ebene, in welcher die beiden Schneiden 42, 43 liegen, erstreckt sich durch den Basisbereich 41 eine durchgehende Öffnung 44. Diese weist einen ersten sich kegelstumpfförmig verjüngenden Bereich 441 auf, der in einen zylinderförmigen Bereich 442 übergeht. In der durchgehenden Öffnung 44 ist ein Verbindungselement 5 angeordnet, das in Figur 6 dargestellt ist. Dieses weist ein Zentralelement 51 auf, welches aus einem kegelstumpfförmigen Bereich 511 und aus einem im Wesentlichen zylinderförmigen Bereich 512 besteht. Der kegelstumpfförmige Bereich 511 ist in dem ersten Bereich 441 der durchgehenden Öffnung 44 angeordnet, und der im Wesentlichen zylinderförmige Bereich 512 ist in dem zweiten Bereich 442 der durchgehenden Öffnung 44 angeordnet. Ein Befestigungselement 52 steht aus der durchgehenden Öffnung 44 heraus. Es hat eine im Wesentlichen quaderförmige Form und weist orthogonal zur Längsachse des Verbindungselementes 5 zwei längere erste Seiten 521 auf, sowie zwei kürzere zweite Seiten 522, welche leicht abgerundet sind. Während die ersten Seiten 521 länger als die Breite b des Durchbruchs 34 sind, sind die zweiten Seiten 522 kürzer als die Breite b des Durchbruchs 34. Zudem ist die Länge der ersten Seiten 521 größer als der Durchmesser der Verbindungsöffnung 33. Das Verbindungselement 5 ist so in der durchgehenden Öffnung 44 angeordnet, dass die ersten Seiten 521 parallel zur Längsachse der Schneidplatte 4 verlaufen.

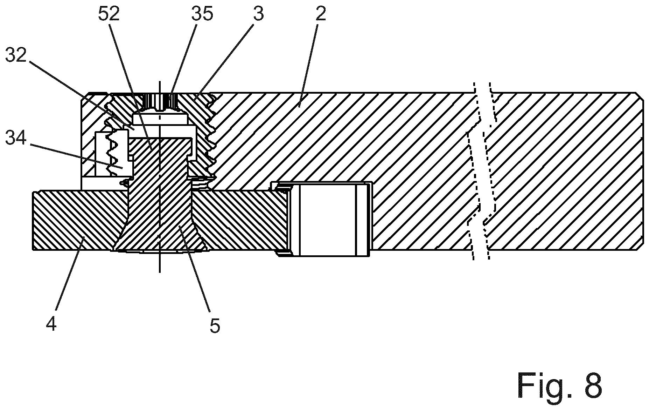

In den Figuren 7 und 8 ist dargestellt, wie die Schneidplatte 4 in einem Ausführungsbeispiel der Erfindung im erfindungsgemäßen Werkzeugsträger 1 platziert werden kann. Wenn der Gewindestift 3 in der Gewindebohrung 222 so gedreht ist, dass sich der Durchbruch 34 mit der Seitenöffnung 221 deckt, so kann die Schneidplatte 4 entlang der Längsrichtung des Werkzeugträgers 1 in die Aufnahme 21 hineingeschoben werden. Hierbei wird das Befestigungselement 52 entlang seiner ersten Seite 521 durch die Seitenöffnung 221 und dem Durchbruch 34 in den Hohlraum 32 des Gewindestifts 3 eingeführt.

Während eine der Schneiden 42 über den Grundkörper 2 des Werkzeugträgers 1 hinaus ragt und so zur Bearbeitung eines Werkstücks verwendet werden kann, kommt die andere Schneide 43 im Schneidenbereich 212 zu liegen, wobei sie in Längsrichtung des Grundkörpers 2 jedoch nicht an diesen anschlägt. Der Basisbereich 41 der Schneidplatte 4 kommt im zentralen Bereich 211 der Aufnahme 1 zum Liegen. Dabei schlägt er entlang der Längsrichtung des Grundkörpers 2 an einer ersten Anschlagfläche 23 an und quer zur Längsrichtung des Grundkörpers 2 an einer zweiten Anschlagfläche 24 an. Diese beiden Anschlagflächen 23, 24 begrenzen die Aufnahme 21. Sie ermöglichen bei der Bearbeitung eines Werkstücks die Einleitung von von der Schneidplatte 4 aufgenommenen Kräften in den Grundkörper 2 des Werkzeugträgers 1. Wird nun der Gewindestift 3 so in der Gewindebohrung 22 gedreht, dass sich der Durchbruch 34 nicht mehr mit der Seitenöffnung 221 deckt, so wird ein Herausbewegen der Schneidplatte 4 aus der Aufnahme 21 unterbunden. Diese kann nicht mehr in Längsrichtung des Werkzeugträgers 1 aus diesem herausgeschoben werden. Auch eine Entnahme quer zur Längsrichtung des Werkzeugträgers 1 ist ausgeschlossen, da die erste Seite 521 des Befestigungselementes 52 länger ist als der Durchmesser der Verbindungsöffnung 33, sodass das Befestigungselement 52 nicht aus dem Hohlraum 32 herausbewegt werden kann. Wird der Gewindestift 3 nun weiter angezogen, so übt der Rand des Hohlraumes 32 Druck auf das Befestigungselement 52 aus und zieht es mit der Drehbewegung des Gewindestifts 3 orthogonal zum Werkzeugträger 1 mit. Die dabei auf das Verbindungselement 5 wirkende Kraft wird auf die Schneideplatte 4 übertragen ohne dass die Gefahr bestände, dass sich das Verbindungselement 5 aus der durchgehenden Öffnung 44 der Schneidplatte 4 löst. Vielmehr wird dieses durch die Kegelstumpfform des ersten Bereichs 441 der durchgehenden Öffnung 4 und des ersten Abschnitts 511 des Zentralelementes 51 des Verbindungselementes 5 nur noch fester an die Schneidplatte 4 herangedrückt. Somit wird die Schneidplatte 4 auch gegen eine Bewegung parallel zur Längsachse des Gewindestifts 3 gesichert.

Soll die Schneidplatte 4 um 180° gedreht werden, um die in Benutzung befindliche Schneide 42 gegen die noch unbenutzte Schneide 43 auszutauschen oder soll die Schneidplatte 4 komplett entfernt und durch eine andere Schneidplatte ersetzt werden, so genügt eine geringfügige Drehung des Gewindestifts 3 mittels eines Innensechskantschlüssels um den Durchbruch 34 des Gewindestifts 3 wieder mit der Seitenöffnung 221 der Gewindebohrung 22 zur Deckung zu bringen, so dass eine Entnahme der Schneidplatte 4 aus der Aufnahme 21 ermöglicht wird. Dies ermöglicht im Gegensatz zu herkömmlichen Werkzeugträgersystemen ein schnelles Wechseln der Schneidplatte 4 auch unter den beengenden Bedingungen einer Langdrehmaschine.

## Patentansprüche

1. Werkzeugträger (1) für eine Langdrehmaschine, aufweisend
- einen Grundkörper (2),
- eine Aufnahme (21), die eingerichtet ist, um eine Schneidplatte (4) aufzunehmen,
- eine Gewindebohrung (22), die sich orthogonal zu der Aufnahme (21) durch den Grundkörper (2) erstreckt und mit ihrem einen Ende in der Aufnahme (21) endet, und
- einen Gewindestift (3), der ein Außengewinde (31) aufweist,
wobei der Gewindestift (3) in der Gewindebohrung (22) angeordnet ist und einen Hohlraum (32) aufweist, der durch eine Verbindungsöffnung (33) mit der Aufnahme (21) verbunden ist,
**dadurch gekennzeichnet dass** mindestens ein Durchbruch (34) von dem Hohlraum (32) durch das Außengewinde (31) erstreckt, wobei der Durchbruch (34) zu der Aufnahme (21) hin offen ist.

2. Werkzeugträger nach Anspruch 1, **dadurch gekennzeichnet, dass** die Gewindebohrung (22) eine Seitenöffnung (221) aufweist, die sich in Längsrichtung des Grundkörpers (2) zu einem Ende des Grundkörpers (2) hin erstreckt, wobei die Länge der Seitenöffnung (221) mindestens der Länge des Durchbruchs (34) entspricht und die Breite der Seitenöffnung (221) mindestens der Breite (b) des Durchbruchs (34) entspricht.

3. Werkzeugträger nach Anspruch 1 oder 2, **dadurch gekennzeichnet, dass** die Aufnahme (21) eingerichtet ist, um eine Wechselschneidplatte (4) aufzunehmen, wobei sie einen Schneidenbereich (212) zur Aufnahme einer Schneide (42, 43) der Wechselschneidplatte aufweist.

4. Werkzeugträger nach einem der Ansprüche 1 bis 3, **dadurch gekennzeichnet, dass** der Gewindestift (3) an seinem der Aufnahme abgewandten Ende eine Eingriffsöffnung (35) aufweist, die eingerichtet ist, um mit einem Drehwerkzeug einzugreifen.

5. Werkzeugset, umfassend einen Werkzeugträger (1) nach einem der Ansprüche 1 bis 4 und eine Schneidplatte (4), wobei die Schneidplatte (4) einen Basisbereich (41) mit mindestens einer Schneide (42, 43) und eine durch den Basisbereich (41) durchgehende Öffnung (44) aufweist, wobei in der durchgehenden Öffnung (44) ein Verbindungselement (5) angeordnet ist, das sich aus der durchgehenden Öffnung (44) heraus erstreckt und das außerhalb der durchgehenden Öffnung (44) ein Befestigungselement (52) aufweist, wobei das Befestigungselement (52) eine im Wesentlichen rechteckige Form mit einer ersten Seite (521) und einer zweiten Seite (522) aufweist und sich seine erste Seite (521) orthogonal zu der durchgehenden Öffnung (44) erstreckt und sich seine zweite Seite (522) orthogonal zu der durchgehenden Öffnung (44) erstreckt, wobei die erste Seite (521) länger als die zweite Seite (522) ist.

6. Werkzeugset nach Anspruch 5, **dadurch gekennzeichnet, dass** der Hohlraum (32) eingerichtet ist, um das Befestigungselement (52) aufzunehmen.

7. Werkzeugset nach Anspruch 5 oder 6, **dadurch gekennzeichnet, dass** der Durchbruch (34) eine Breite (b) aufweist, die kleiner ist als die Länge der ersten Seite (521) und die größer ist als die Länge der zweiten Seite (522).

8. Werkzeugset nach einem der Ansprüche 5 bis 7, **dadurch gekennzeichnet, dass** die Verbindungsöffnung (33) einen Durchmesser aufweist, der kleiner ist als die Länge der ersten Seite (521).

9. Werkzeugset nach einem der Ansprüche 5 bis 8, **dadurch gekennzeichnet, dass** es sich bei der Schneidplatte (4) um eine Wechselschneidplatte (4) mit zwei Schneiden (42, 43) handelt und ihre durchgehende Öffnung (44) im Mittelpunkt des Basisbereichs (41) angeordnet ist.

10. Werkzeugset nach einem der Ansprüche 5 bis 9, **dadurch gekennzeichnet, dass** die Querschnittsfläche der durchgehenden Öffnung (44) entlang der durchgehenden Öffnung (44) zunimmt, und dass die Querschnittsfläche des Verbindungselements (5) von dem Ende, welches das Befestigungselement (52) aufweist, zu dem von dem Befestigungselement (52) abgewandten Ende hin zunimmt.

## Claims

1. Tool holder (1) for a longitudinal turning lathe machine, having
- a base body (2),
- a receiver (21) that is configured to receive a cutting plate (4),
- a threaded hole (22) that extends orthogonally relative to the receiver (21) through the base body (2) and ends with its one end in the receiver (21), and
- a threaded pin (3) that has a male thread (31),
wherein the threaded pin (3) is arranged in the threaded hole (22) and has a cavity (32) which is connected to the receiver (21) through a connection opening (33), **characterised in that** at least one aperture (34) extends from the cavity (32) through the male thread (31), wherein the aperture (34) is open towards the receiver (21).

2. Tool holder according to claim 1, **characterised in that** the threaded hole (22) has a side opening (221) which extends towards an end of the base body (2) in the longitudinal direction of the base body (2), wherein the length of the side opening (221) corresponds at least to the length of the aperture (34) and the width of the side opening (221) corresponds at least to the width (b) of the aperture (34).

3. Tool holder according to claim 1 or 2, **characterised in that** the receiver (21) is configured to receive a interchangeable cutting plate (4), wherein it has a cutting region (212) for receiving a cutting edge (42, 43) of the removable cutting plate.

4. Tool holder according to one of claims 1 to 3, **characterised in that** the threaded pin (3) has an inlet opening (35) on its end facing away from the receiver, said inlet opening being configured to be engaged with a rotating tool.

5. Tool set, comprising a tool holder (1) according to one of claims 1 to 4 and a cutting plate (4), wherein the cutting plate (4) has a base region (41) having at least one cutting edge (42, 43) and an opening (44) running through the base region (41), wherein a connection element (5) is arranged in the opening (44) running though, said connection element extending out of the opening (44) running through and having a fixing element (52) outside the opening (44) running though, wherein the fixing element (52) has a substantially rectangular shape with a first side (521) and a second side (522) and its first side (521) extends orthogonally relative to the opening (44) running through and its second side (522) extends orthogonally relative to the opening (44) running through, wherein the first side (521) is longer than the second side (522).

6. Tool set according to claim 5, **characterised in that** the cavity (32) is configured to receive the fixing element (52).

7. Tool set according to claim 5 or 6, **characterised in that** the aperture (34) has a width (b) that is smaller than the length of the first side (521) and that is greater than the length of the second side (522).

8. Tool set according to one of claims 5 to 7, **characterised in that** the connection opening (33) has a diameter that is smaller than the length of the first side (521).

9. Tool set according to one of claims 5 to 8, **characterised in that** the cutting plate (4) is a interchangeable cutting plate (4) having two cutting edges (42, 43) and its opening (44) running through is arranged in the centre of the base region (41).

10. Tool set according to one of claims 5 to 9, **characterised in that** the cross-sectional area of the opening (44) running through increases along the opening (44) running through, and the cross-sectional area of the connection element (5) increases from the end that has the fixing element (52) along to the end facing away from the fixing element (52).

## Revendications

1. Porte outil (1) destiné à un tour automatique longitudinal comportant:
- un corps de base (2),
- un logement (21) destiné à recevoir une plaque de coupe (4),
- un perçage fileté (22) qui s'étend perpendiculairement au logement de réception (21) au travers du corps de base (2) et se termine dans ce logement (21) par l'une de ses extrémités, et
- une tige filetée (3) comportant un filetage mâle (31),
cette tige filetée (3) étant installée dans le perçage fileté (22) et comportant une cavité (32) qui est reliée au logement de réception (21) par une ouverture de liaison (33),
**caractérisé en ce qu'**
au moins un évidement (34) s'étend à partir de la cavité (32) au travers du filetage mâle (31), cet évidement (34) étant ouvert vers le logement de réception (21).

2. Porte-outil conforme à la revendication 1,
**caractérisé en ce que**
le perçage fileté (22) comporte une ouverture latérale (221) qui s'étend dans la direction longitudinale du corps de base (2) vers une extrémité de ce corps de base (2), la longueur de l'ouverture latérale (221) correspondant au moins à la longueur de l'évidement (34) et la largeur de l'ouverture latérale (221) correspondant au moins à la largeur (b) de l'évidement (34).

3. Porte-outil conforme à la revendication 1 ou 2,
**caractérisé en ce que**
le logement de réception (21) est configuré pour recevoir une plaque de coupe (4) interchangeable, et comprend une zone de lame (212) permettant de recevoir une lame (42, 43) de la plaque de coupe interchangeable.

4. Porte-outil conforme à l'une quelconque des revendications 1 à 3,
**caractérisé en ce que**
la tige filetée (3) comporte, à son extrémité située à l'opposé du logement de réception, une ouverture de mise en prise (35) qui est configuré pour venir en prise avec un outil rotatif.

5. Jeu d'outil comprenant un porte-outil (1) conforme à l'une des revendications 1 à 4, et une plaque de coupe (4), cette plaque de coupe (4) comprenant une zone de base (41) équipée d'au moins une lame (42, 43) et une ouverture (44) passant au travers de la zone de base (41), dans cette ouverture traversante (44) étant installé un élément de liaison (5) qui dépasse de celle-ci et comporte, à l'extérieur de l'ouverture traversante (44), un élément de fixation (52), cet élément de fixation (52) ayant essentiellement une forme rectangulaire avec un premier côté (521) et un second côté (522), et le premier côté (521) s'étendant perpendiculairement à l'ouverture traversante (44) et le second côté (522 ) s'étendant perpendiculairement à l'ouverture traversante (44), le premier côté (521) étant plus long que le second côté (522).

6. Jeu d'outil conforme à la revendication 5,
**caractérisé en ce que**
la cavité (32) est configurée pour recevoir l'élément de fixation (52).

7. Jeu d'outil conforme à la revendication 5 ou 6,
**caractérisé en ce que**
l'évidement (34) a une largeur (b) inférieure à la longueur du premier côté (521) et supérieure à la longueur du second côté (522).

8. Jeu d'outil conforme à l'une des revendications 5 à 7,
**caractérisé en ce que**
l'ouverture de liaison (33) a un diamètre inférieur à la longueur du premier côté (521).

9. Jeu d'outil conforme à l'une des revendications 5 à 8,
**caractérisé en ce que**
la plaque de coupe est une plaque de coupe interchangeable (4) ayant deux lames (42, 43) et son ouverture traversante (44) est située au centre de la zone de base (41).

10. Jeu d'outil conforme à l'une des revendications 5 à 9,
**caractérisé en ce que**
la surface de la section transversale de l'ouverture traversante (44) augmente le long de cette ouverture traversante (44), et la surface de la section transversale de l'élément de liaison (5) augmente de l'extrémité comportant l'élément de fixation (52) à l'extrémité située à l'opposé de l'élément de fixation (52).
